Europäisches Patentamt

European Patent Office

Office européen des brevets

(11) Veröffentlichungsnummer : **0 131 794**
**B1**

# (12) EUROPÄISCHE PATENTSCHRIFT

(45) Veröffentlichungstag der Patentschrift :
15.06.88

(51) Int. Cl.⁴ : **G 03 B 3/10**

(21) Anmeldenummer : **84107321.6**

(22) Anmeldetag : **26.06.84**

(54) Selbstfokussiervorrichtung.

(30) Priorität : **12.07.83 DE 3325042**

(43) Veröffentlichungstag der Anmeldung :
**23.01.85 Patentblatt 85/04**

(45) Bekanntmachung des Hinweises auf die Patenterteilung : **15.06.88 Patentblatt 88/24**

(84) Benannte Vertragsstaaten :
**CH DE FR GB LI NL SE**

(56) Entgegenhaltungen :
**EP-A- 0 082 525**
**AT-B- 353 095**
**DE-A- 2 036 119**
**DE-A- 2 122 329**
**DE-A- 2 512 240**
**DE-B- 2 251 757**
**GB-A- 1 576 306**
**GB-A- 2 052 090**
**US-A- 3 037 423**

(73) Patentinhaber : **KODAK AKTIENGESELLSCHAFT**
**Postfach 369**
**D-7000 Stuttgart-Wangen 60 (DE)**
**DE**
**EASTMAN KODAK COMPANY**
**343 State Street**
**Rochester New York 14650 (US)**
**CH FR GB LI NL SE**

(72) Erfinder : **Beuter, Bernd**
**Filderweg 28**
**D-7303 Neuhausen (DE)**

(74) Vertreter : **Lewandowsky, Klaus et al**
**Kodak Aktiengesellschaft Patentabteilung Postfach 369**
**D-7000 Stuttgart 60 (DE)**

**Beschreibung**

Die Erfindung betrifft eine Schaltungsanordnung für eine Selbstfokussiervorrichtung für Stehbildprojektoren. Selbstfokussiervorrichtungen, auch als Autofocus bezeichnet, werden verwendet, um bei unterschiedlicher Lage eines abzubildenden Objekts zu einer Abbildungsoptik eine selbsttätige Scharfeinstellung in der Abbildungsebene zu erzielen und so eine manuelle Scharfstellung überflüssig zu machen.

Bei Projektoren wurde zu diesem Zweck hauptsächlich die aktive optische Triangulationsmethode angewandt, bei der ein meist mit der Abbildungsoptik gekoppelter Meßlichtstrahl in einem bestimmten Winkel auf das zu fokussierende Dia oder Objekt gerichtet wird und von diesem zu einem ebenfalls mit der Abbildungsoptik gekoppelten Doppelphotoempfänger reflektiert wird. Hierbei ist der Doppelphotoempfänger so ausgerichtet, daß der reflektierte Meßlichtstrahl je nach der Lage des Objektivs zur Sollage auf entsprechend unterschiedliche Bereiche des Doppelphotoempfängers fällt und so die beiden Photoempfängerhälften bei Abweichungen von der Sollage unterschiedlich beleuchtet werden.

In diesem Fall wird über einen nachgeschalteten Regelverstärker ein mit der Abbildungsoptik gekoppelter Stellmotor in der Weise betätigt, daß er die Abbildungsoptik und den mit dieser gekoppelten Meßlichtstrahl in Richtung auf die Sollage verschiebt, in der beide Photoempfängerhälften gleich stark beleuchtet sind. Derartige Anordnungen sind z. B. aus der DE-PS 12 58 624 bzw. der DE-OS 15 47 146 bekannt. Obwohl diese bekannten Anordnungen im Prinzip funktionsfähig sind, treten doch in der Praxis verschiedene Schwierigkeiten und Nachteile auf.

So wird z. B. das auf den Photoempfänger fallende Meßlicht durch das Projektionslicht der Projektorlampe beeinflußt. Man hat versucht, diesen Einfluß durch Einbau von Infrarotfiltern in den Meßlichtstrahlengang zu verringern. Da jedoch auch das Projektionslicht einen beträchtlichen IR-Anteil aufweist, ist damit eine Beeinflussung nicht ganz zu vermeiden, was eine Verringerung der Empfindlichkeit und Genauigkeit der Meßanordnung zur Folge hat. Ein weiterer Nachteil besteht darin, daß die Intensität des vom Dia reflektierten Meßlichts von den Reflexionseigenschaften der jeweiligen Diaoberfläche abhängt, so daß das Meßlicht sowohl durch unterschiedliche Diaarten, als auch durch den unterschiedlichen Bildinhalt der Dias beeinflußt wird, was ebenfalls die Genauigkeit der Meßanordnung beeinträchtigt.

Aus der GB-A-2 052 090 ist ein Abbildungssystem mit einem optoelektronischen Detektionssystem bekannt, bei dem die Genauigkeit der Messung unabhängig ist von der Intensität des Meßlichtes und den Reflexionseigenschaften der detektierten Oberfläche. Dieses System wird bei der Halbleiterherstellung verwendet und arbeitet mit einem Laserstrahl. Es ist daher für Stehbildprojektoren zu aufwendig.

Weiterhin ist aus der US 3 037 423 ein automatisches Fokussiersystem für Projektionsgeräte bekannt, bei dem der Meßlichtstrahl gepulst ist und auch im Infrarotbereich liegen kann. Die Anordnung enthält jedoch keinen Gleichstrommotor und keine Schaltung zur Regelung der Meßlichtquelle, so daß ihr die hierdurch bedingten Nachteile noch anhaften.

Eine weitere Schwierigkeit besteht darin, den Stellmotor der Anordnung so anzusteuern, daß er exakt in der Sollage zum Stillstand kommt, da der Motor durch die Massenträgheit seines Ankers das Bestreben hat, über die Sollstellung hinauszulaufen. Dies kann dazu führen, daß der Photoempfänger ein Gegensignal erhält und dadurch der Motor in umgekehrter Richtung angesteuert wird. Auf diese Weise kann der Motor mehrfach oder dauernd um seine Sollage hin- und herpendeln. Es wurde versucht, dies durch eine entsprechende Gegenkopplung zu verhindern, jedoch wurde hierdurch die Stellgenauigkeit der Anordnung verringert.

Der vorliegenden Erfindung liegt die Aufgabe zugrunde, eine gattungsgemäße Selbstfokussiervorrichtung so auszubilden, daß die genannten Nachteile vermieden werden. Diese Aufgabe wird erfindungsgemäß durch die kennzeichnenden Merkmale des Anspruchs 1 gelöst. Die übrigen Ansprüche beschreiben vorteilhafte Ausgestaltungen des Erfindungsgegenstandes.

Im folgenden wird die Erfindung anhand des in der Zeichnung dargestellten Ausführungsbeispiels beschrieben.

Es zeigen

Fig. 1 eine schematische Darstellung einer erfindungsgemäßen Selbstfokussiervorrichtung und

Fig. 2 ein Schaltbild einer erfindungsgemäßen Selbstfokussiervorrichtung.

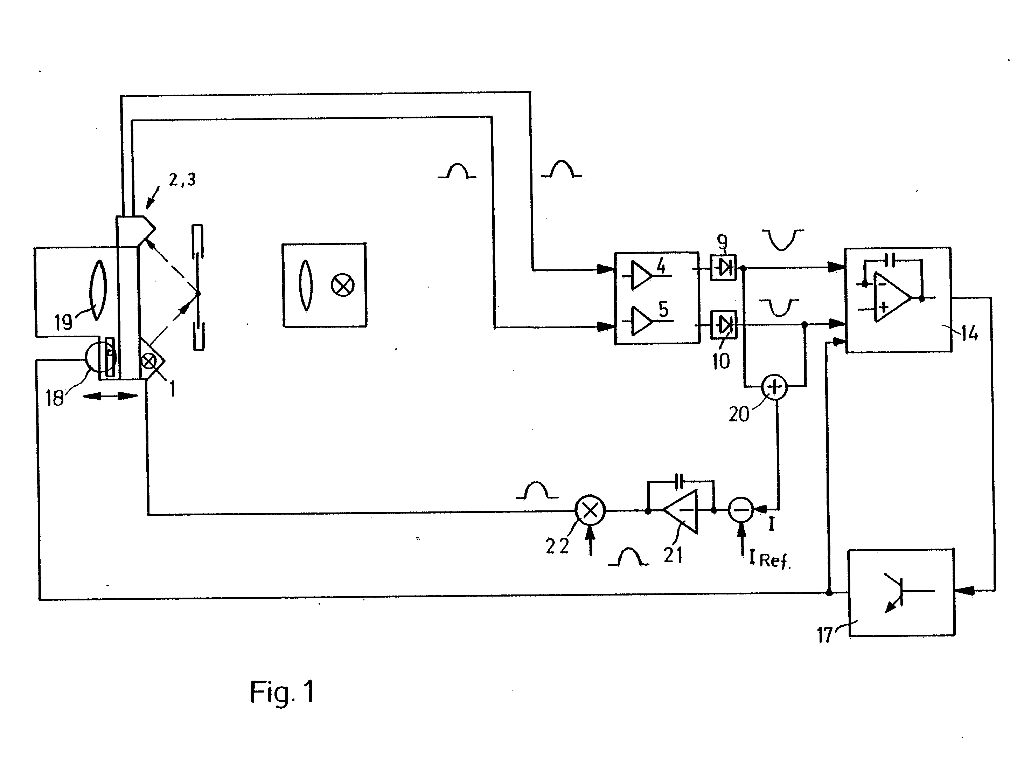

Wie in Fig. 1 dargestellt, wird von einer Meßlichtquelle 1 ein Meßlichtstrahl auf das zu fokussierende Dia gerichtet und von diesem auf einen Doppelphotoempfänger 2, 3 reflektiert. Hierbei sind der Doppelphotoempfänger und die Meßlichtquelle fest mit dem Projektionsobjektiv 19 verbunden, welches durch den Stellmotor 18 über einen Exzenter in Richtung der optischen Achse verschiebbar ist. Wenn der Abstand des Dias zum Projektionsobjektiv dem Sollwert entspricht, fällt der reflektierte Meßlichtstrahl genau auf die Mitte des Doppelphotoempfängers, so daß beide Photoempfängerhälften gleich stark beleuchtet sind und somit auch gleiche Signale abgeben. Weist der Abstand des Dias zum Projektionsobjektiv einen vom Sollwert abweichenden Wert auf, so fällt der reflektierte Meßlichtstrahl nicht mehr auf die Mitte des Doppelphotoempfängers. In diesem Fall wird eine der beiden Photoempfängerhälften vom Meßlichtstrahl stärker beleuchtet sein, als die andere, so daß beide Hälften unterschiedliche Signale abgeben.

Durch die Verwendung einer Infrarot-Leuchtdiode (IR-LED) als Meßlichtquelle in Verbindung mit einem entsprechenden infrarotempfindlichen Doppelphotoempfänger, kann der spektrale Arbeitsbereich des Meßlichtsystems in einen solchen Infrarotbereich gelegt werden, in welchem der Infrarotanteil des Projektionslichtes nur noch verhältnismäßig gering ist. Um den störenden Einfluß des Projektionslichtes noch weiter zu verringern, wird die IR-Leuchtdiode mit pulsierendem Strom gespeist, so daß sie pulsierendes Licht, d. h. Wechsellicht abgibt. Da das Projektionslicht infolge der thermischen Trägheit der Projektionslampenwendel nur einen geringen Wechsellichtanteil aufweist und praktisch nur aus gleichmäßigem Licht besteht, kann hierdurch das Meßlicht noch besser vom Projektionslicht unterschieden werden.

Die von den beiden Photoempfängerhälften 2, 3 abgegebenen Signale werden getrennten Wechselspannungsverstärkern 4, 5 zugeführt, die nur den verstärkten Wechselspannungsanteil der Signale weitergeben. Hierdurch werden die vom Projektionslicht herrührenden, eventuell noch vorhandenen Gleichspannungssignale unterdrückt. Die verstärkten Wechselspannungssignale werden dann getrennten Gleichrichterschaltungen 9, 10 zugeführt, dort gleichgerichtet und an die beiden Eingänge eines Differenzverstärkers 14 angelegt. Dieser gibt nur dann ein Ausgangssignal ab, wenn zwischen den beiden Eingangssignalen eine Differenz besteht, d. h. wenn die von den beiden Photoempfängerhälften herrührenden Signale gleich groß sind, wird kein Signal zur Ansteuerung des Stellmotors 18 abgegeben. Wenn jedoch die beiden Signale unterschiedlich sind, wird je nachdem, ob die Differenz positiv oder negativ ist, ein positives oder negatives Ausgangssignal an die Treiberstufe 17 abgegeben, welche den Stellmotor 18 in der einen oder anderen Drehrichtung ansteuert, so daß das Objektiv 19 so lange verschoben wird, bis die beiden Signale wieder gleich groß sind.

Da die unterschiedlichen Dias sehr unterschiedliche Reflektionseigenschaften aufweisen können, wäre das auf den Doppelphotoempfänger gelangende Meßlicht von entsprechend unterschiedlicher Intensität. Hierdurch würde der Doppelphotoempfänger auch entsprechend unterschiedliche Signale abgeben, was wiederum eine unterschiedliche Empfindlichkeit und eine unterschiedliche Einstellgenauigkeit der gesamten Anordnung zur Folge hätte.

Aus diesem Grund ist nach den beiden Gleichrichterschaltungen 9, 10 eine Summierschaltung 20 vorgesehen, welche die beiden Signale addiert. Die Summe dieser beiden Signale ist ein Maß für die Intensität des auf den Doppelphotoempfänger gelangenden Meßlichtes. Dieses Summensignal wird einem Regelverstärker zugeführt, welcher den Strom durch die IR-Leuchtdiode in der Weise regelt, daß das von der Summierschaltung 20 abgegebene Signal und damit das auf den Doppelphotoempfänger gelangende Meßlicht immer einen vorgegebenen und von den Reflektionseigenschaften des jweiligen Dias unabhängigen Wert aufweist.

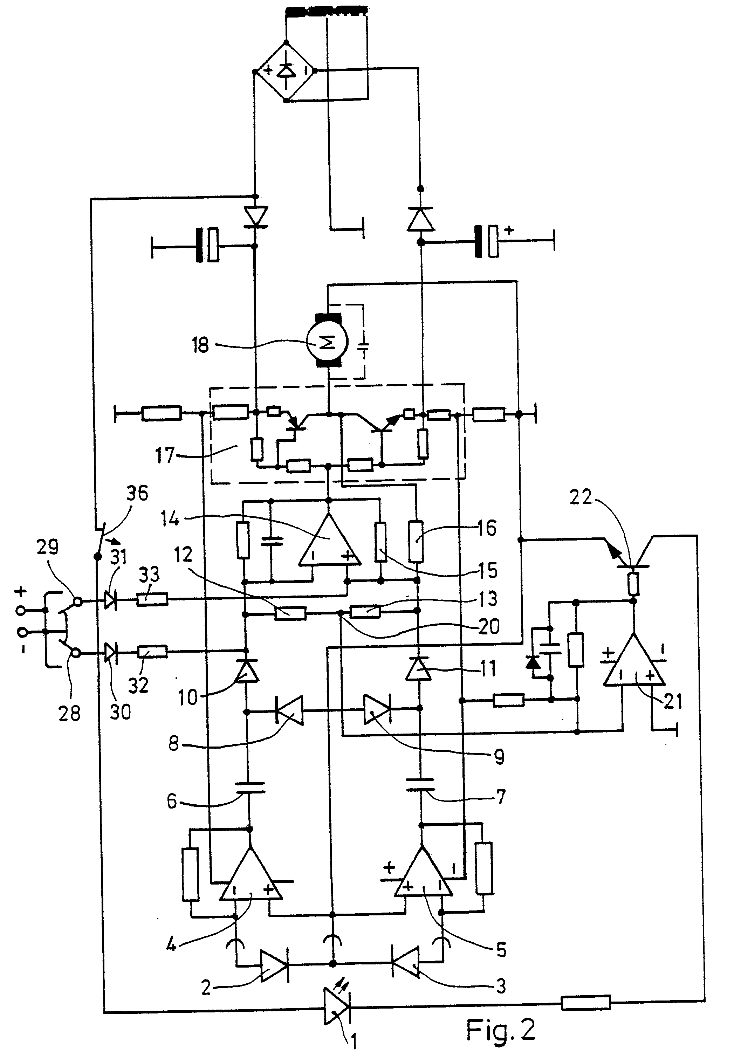

Gemäß Fig. 2 besteht der Doppelphotoempfänger in vorteilhafter Weise aus nebeneinander angeordneten Photodioden 2, 3, die als Photoelemente arbeiten. Da die Photoelemente nur dann in einem größeren Beleuchtungsbereich linear arbeiten, wenn sie im Kurzschluß betrieben werden, werden für die Wechselspannungsverstärker 4, 5 Operationsverstärker verwendet, die durch Gegenkopplungswiderstände so geschaltet sind, daß ihr Eingang für die Photodioden 2, 3 praktisch einen Kurzschluß darstellt. Zur Abtrennung der Gleichspannungsanteile werden die verstärkten Ausgangssignale über Kondensatoren 6 bzw. 7 den Gleichrichterschaltungen 8, 10 bzw. 9, 11 zugeführt.

Die Ausgänge der beiden Gleichrichterschaltungen 8, 10 bzw. 9, 11 sind mit den beiden Eingängen des Differenzverstärkers 14 verbunden. Dieser besteht ebenfalls aus einem Operationsverstärker, dessen Gegenkopplungszweig einen Kondensator enthält, so daß der Operationsverstärker als Integrator geschaltet ist und dadurch die den gleichgerichteten Signalen noch überlagerten Wechselspannungsanteile weitgehend beseitigt.

Da die Ausgangsleistung des Differenzverstärkers 14 nicht ausreicht, um den Stellmotor 18 direkt anzusteuern, ist hierzu eine Treiberstufe 17 vorgesehen. Im Prinzip kann diese Treiberstufe in üblicher Weise als nicht invertierender Leistungsverstärker in komplementärer Emitterfolgerschaltung ausgebildet sein. In diesem Fall müßte allerdings der Differenzverstärker 14 so stark gegengekoppelt werden, daß der Stellmotor 18 nicht durch die Massenträgheit seines Ankers um den Abgleichpunkt hin- und herpendeln kann. Hierdurch wäre jedoch die Ansprechempfindlichkeit und die Einstellgenauigkeit der Anordnung begrenzt.

Um diese Eigenschaften zu verbessern, kann gemäß Fig. 2 die Treiberstufe 17 als invertierender Leistungsverstärker ausgebildet sein. Hierdurch erhält man die Möglichkeit, die Gegenkopplung des insgesamt aus dem Differenzverstärker 14 und der Treiberstufe 17 bestehenden Regelverstärkers variabel zu gestalten. Dies soll in der Weise geschehen, daß normalerweise die Gegenkopplung gering und dadurch die Regelverstärkung hoch ist, daß jedoch im Abgleichpunkt, d. h. in der Sollstellung des Objektivs, die durch den Stellmotor 18 hervorgerufene Gegen-EMK eine so starke Gegenkopplung hervorruft, daß der Motor sehr schnell abgebremst wird.

Gemäß Fig. 2 wird diese Arbeitsweise in der Weise bewerkstelligt, daß die Ausgangsspannung vom Ausgang der Treiberstufe 17, an dem auch der Stellmotor 18 angeschlossen ist, über einen Widerstand 16 auf den nicht invertierenden Eingang des Differenzverstärkers 14 zurückgeführt wird. Aufgrund der Invertierung in der Treiberstufe 17 wirkt diese Rückführung als Gegenkopplung, wobei der Widerstand 16 so dimensioniert ist, daß sich ein hoher Gegenkopplungsfaktor ergibt. Die Ausgangsspannung des Differenzverstärkers 14 wird nun direkt vom Ausgang des Differenzverstärkers 14 über einen Widerstand 15 ebenfalls auf den nicht invertierenden Eingang des Differenzverstärkers 14 zurückgeführt, wodurch sich eine Mitkopplung ergibt. Der Wert des Widerstandes 15 ist nun so gewählt, daß die Mitkopplungsspannung kleiner ist als die über den Widerstand 16 gelangende Gegenkopplungsspannung. Hierdurch wird die Gegenkopplungsspannung teilweise aufgehoben und der Gegenkopplungsfaktor entsprechend verringert, wodurch sich eine hohe Regelverstärkung ergibt. Wenn nun in der Nähe des Abgleichpunktes die Ausgangsspannung des Differenzverstärkers 14 sehr klein wird, dann wird auch die über den Widerstand 15 gelangende Mitkopplungsspannung entsprechend klein. Da der Stellmotor 18 jedoch durch sein Schwungmoment noch weiterläuft (und das Bestreben hat, über den Abgleichpunkt hinauszulaufen) wird durch dessen Gegen-EMK am Ausgang der Treiberstufe 17 eine Gegenkopplungsspannung aufrechterhalten, die über den Widerstand 16 an den nicht invertierenden Eingang des Differenzverstärkers 14 gelangt. Hierdurch erhält der Stellmotor 18 eine starke Gegenspannung und wird sehr schnell gebremst. Auf diese Weise wird trotz hoher Regelverstärkung ein Überschwingen bzw. Hin- und Herpendeln des Stellmotors 18 um den Abgleichpunkt verhindert und insgesamt eine hohe Ansprechempfindlichkeit und Einstellgenauigkeit der Anordnung erreicht.

Dieselbe Wirkung kann auch mit einer komplementären Emitterfolgerstufe erreicht werden, wenn der Widerstand 16 vom Ausgang der Treiberstufe 17 zum invertierenden Eingang des Differenzverstärkers 14 geführt wird.

An den Ausgängen der beiden Gleichrichterschaltungen 8, 10 bzw. 9, 11 sind Summierwiderstände 12, 13 angeschlossen, die auf einen gemeinsamen Summationspunkt 20 geschaltet sind. Die Spannung an diesem Summationspunkt stellt ein Maß für die Helligkeit des vom Doppelphotoempfänger 2, 3 empfangenen und vom scharf zu stellenden Dia reflektierten Meßlichtes dar. Diese Spannung wird dem Eingang eines weiteren Regelverstärkers 21 zugeführt, dessen Ausgang über einen Längstransistor 22 den Strom durch die IR-Leuchtdiode 1 und damit die Intensität des Meßlichtstrahls in der Weise steuert, daß das auf den Doppelphotoempfänger 2, 3 fallende Meßlicht unabhängig von den Reflektionseigenschaften des scharf zu stellenden Dias immer dieselbe Intensität aufweist. Die IR-Leuchtdiode ist hierbei direkt an die pulsierende Halbwellenspannung des Projektorgleichrichters angeschlossen, so daß deren Abstrahlung mit der Frequenz dieser pulsierenden Spannung moduliert ist. Durch den Längstransistor 22 wird hierbei die Amplitude dieser Modulation gesteuert. Dies ist die einfachste Möglichkeit einer impulsmäßigen Ansteuerung der Meßlichtquelle 1. Es sind jedoch im Rahmen der Erfindung auch andere Möglichkeiten der impulsmäßigen Ansteuerung, auch mit anderen Frequenzen als der Netzfrequenz, denkbar.

Zum Abschalten der Autofokusfunktion kann ein einfacher Schalter 36 im Stromkreis der IR-Leuchtdiode vorgesehen sein. Beim Öffnen dieses Schalters wird die Abstrahlung der IR-Leuchtdiode 1 unterbrochen, so daß an den Ausgängen der Gleichrichterschaltungen 8, 10 bzw. 9, 11 keine Spannung mehr auftritt. Der Regelverstärker 14, 17 wird daher auch kein Ansteuersignal für den Stellmotor mehr liefern.

An den Eingängen des Differenzverstärkers 14 sind Widerstände 32, 33 vorgesehen, an die eine übliche Handfokussierung angeschlossen werden kann, die aus zwei mittels einer Schaltwippe wechselseitig betätigbaren Umschaltern besteht, deren Schaltzungen bei Nichtbetätigung am Minuspotential liegen. Um eine Beeinflussung des Autofokusbetriebes durch die Widerstände 32, 33 zu vermeiden, sind Dioden 30, 31 mit diesen Widerständen 32, 33 in Reihe geschaltet, die bei Nichtbetätigung der Schalter 28, 29 der Handfokussierung gesperrt sind, so daß in diesem Falle die Widerstände 32, 33 vollkommen von der übrigen Schaltung abgetrennt sind. Bei Betätigung der Schaltwippe der Handfokussierung wird einer der beiden Schalter 28, 29 umgeschaltet und der entsprechende Eingang des Differenzverstärkers 14 erhält dabei positives Signal. Hierdurch entsteht ein entsprechendes Ausgangssignal für den Stellmotor 18. Damit kann auf einfache Weise eine übliche Fernbedienung zur Handfokussierung bei ausgeschalteter Autofokusfunktion verwendet werden. Diese Art der Handfokussierung hat außerdem den Vorteil, daß die Gegenkopplung des Regelverstärkers auch bei Handfokussierung wirksam ist, so daß der Stellmotor sofort nach dem Loslassen der Fokussierwippe abgebremst wird.

## Patentansprüche

1. Selbstfokussiervorrichtung für Stehbildprojektoren, mit einer Meßlichtquelle (1), deren Meßlichtstrahl auf eine Oberfläche des zu fokussierenden Diapositivs gerichtet und von dieser zu einem mit der Fokussierung gekoppelten Doppelphotoempfänger (2, 3) reflektiert wird, der einen Regelverstärker derart steuert, daß ein diesem nachgeschalteter Gleichstrommotor (18) einen Fokussierantrieb so lange betätigt, bis das vom Objekt reflektierte Meßlicht auf die Mitte des Dopplephotoempfängers fällt, dadurch gekennzeichnet, daß als Meßlichtquelle eine IR-Leuchtdiode (1) verwendet wird, deren Lichtabstrahlung gepulst ist, daß ein Wechselspannungsverstärker (4, 5) vorgesehen ist, der nur den Wechselanteil des vom Doppelphotoempfänger (2, 3) empfangenen Signals verstärkt, der anschließend gleichgerichtet wird, daß ein weiterer Verstärker (14, 17) vorgesehen ist, über den mit diesem gleichgerichteten Signal der Gleichstrommotor (18) angesteuert wird, und daß eine Schaltung (20, 21, 22) vorgesehen ist, durch die die Meßlichtabstrahlung der IR-Leuchtdiode (1) in Abhängigkeit von dem empfangenen Signal geregelt wird.

2. Selbstfokussiervorrichtung nach Anspruch 1, dadurch gekennzeichnet, daß an jede der beiden Photoempfängerhälften (2 bzw. 3) ein Wechselspannungsverstärker (4 bzw. 5) angeschlossen ist, der nur den Wechselanteil des empfangenen Signals verstärkt, daß diesen Verstärkern (4, 5) jeweils eine Gleichrichterschaltung (8, 10 bzw. 9, 11) zur Gleichrichtung des verstärkten Wechselsignals nachgeschaltet ist, deren Ausgänge jeweils mit einem Eingang eines Differenzverstärkers (14) verbunden sind und daß der Ausgang des Differenzverstärkers (14) über eine Treiberstufe (17) den Gleichstrommotor (18) ansteuert.

3. Selbstfokussiervorrichtung nach den Ansprüchen 1 und 2, dadurch gekennzeichnet, daß vom Ausgang der Treiberstufe (17) über einen Widerstand (16) eine Gegenkopplungsspannung an den entsprechenden Eingang des Differenzverstärkers (14) geführt ist, daß vom Ausgang des Differenzverstärkers (14) über einen Widerstand (15) eine Mitkopplungsspannung an den nichtinvertierenden Eingang des Differenzverstärkers (14) geführt ist und daß die Widerstände (15, 16) so bemessen sind, daß die Mitkopplungsspannung kleiner ist als die Gegenkopplungsspannung.

4. Selbstfokussiervorrichtung nach den Ansprüchen 1 bis 3, dadurch gekennzeichnet, daß die gleichgerichteten Signale an den Ausgängen der Gleichrichterschaltungen (8, 10 bzw. 9, 11) über Summierwiderstände (12, 13) auf einen gemeinsamen Summationspunkt (20) geschaltet sind, der mit dem Eingang eines weiteren Verstärkers (21) verbunden ist, dessen Ausgang über einen Längstransistor (22) den Strom durch die IR-Leuchtdiode (1) und damit die Intensität des Meßlichtstrahls steuert.

5. Selbstfokussiervorrichtung nach den Ansprüchen 1 bis 4, dadurch gekennzeichnet, daß an die Eingänge des Differenzverstärkers (14) über Dioden (30, 31) und Widerstände (32, 33) eine in einer Fernbedienung vorgesehene Handfokussierung anschließbar ist, die aus zwei mittels einer Schaltwippe wechselseitig betätigbaren Umschaltern besteht, deren Schaltzungen bei Nichtbetätigung am Minus-Potential liegen und bei Betätigung auf Plus-Potential geschaltet werden und daß die Dioden (30, 31) so gepolt sind, daß an die Eingänge des Differenzverstärkers (14) nur Plus-Potential gelangen kann.

6. Selbstfokussiervorrichtung nach Anspruch 5, dadurch gekennzeichnet, daß ein Schalter (36) zum Abschalten der IR-Leuchtdiode vorgesehen ist, um bei ausschließlichem Betrieb mit Handfokussierung die Selbstfokussierfunktion außer Betrieb zu setzen.

7. Selbstfokussiervorrichtung nach den Ansprüchen 1 bis 6, dadurch gekennzeichnet, daß zur impulsmäßigen Ansteuerung der IR-Leuchtdiode (1) die Halbwellenspannung aus einem Netzgleichrichter verwendet ist.

## Claims

1. Autofocussing device for still projectors, said device comprising a measuring-light source (1) whose measuring-light beam is directed to a surface of the slide to be focussed and reflected by said slide towards a dual photoreceiver (2, 3) coupled with the focussing means, said dual photoreceiver controlling a control amplifier such that a d. c. motor (18) connected to said amplifier actuates a focussing drive until the measuring light reflected by the slide is incident on the center of said dual photoreceiver, characterized in that the measuring light source used is an IR-light-emitting diode (1) whose radiation is pulsed, in that an a. c. amplifier (4, 5) is provided which solely amplifies the a. c. portion of the signal received by the dual photoreceiver (2, 3), said portion being subsequently rectified, in that a further amplifier (14, 17) is provided by means of which this rectified signal controls the d. c. motor (18) and in that a circuit (20, 21, 22) is provided by which the measuring light emitted by the IR-light-emitting diode (1) is controlled in response to the signal received.

2. Autofocussing device according to claim 1, characterized in that each half of the dual photoreceiver (2 and 3 respectively) is joined to an a. c. amplifier (4 and 5 respectively) which only amplifiers the a. c. portion of the signal received, in that said amplifiers (4, 5) are each connected to a rectifier circuit (8, 10 and 9, 11 respectively) for rectifying the amplified a. c. signal, each output of said circuits being connected with an input of a differential amplifier (14), and in that the output of the differential amplifier (14) controls the d. c. motor (18) via a driver stage (17).

3. Autofocussing device according to claims 1 and 2, characterized in that a negative feedback voltage from the output of the driver stage (17) is applied across a resistor (16) to the corresponding input of the differential amplifier (14), in that a positive feedback voltage from the output of the differential amplifier (14) is applied across a resistor (15) to the noninverting input of the differential amplifier (14) and in that the resistors (15, 16) are dimensioned such that the positive feedback voltage is smaller than the negative feedback voltage.

4. Autofocussing device according to claims 1 to 3, characterized in that the rectified signals at the outputs of the rectifier circuits (8, 10 and 9, 11 respectively) are connected via summing resistors (12, 13) to a common summing junction (20) which is joined to the input of a further amplifier (21) whose output controls, via a series transistor (22), the current flowing through the IR-light-emitting diode (1), and thus the intensity of the measuring-light beam.

5. Autofocussing device according to claims 1 to 4, characterized in that a manual focussing means provided in a remote control can be connected via diodes (30, 31) and resistors (32, 33) to the inputs of the differential amplifier (14), said manual focussing means consisting of two change-over switches alternately operated by means of a switching lever whose switching arms are placed to the negative potential when the switch is not operated and are switched to the positive potential when the switch is actuated, and in that the diodes (30, 31) are conductive in a direction so as to allow only a positive potential to reach the inputs of the differential amplifier (14).

6. Autofocussing device according to claim 5, characterized in that a switch (36) is provided for switching off the IR-light-emitting diode in order to inactivate the autofocussing function in the case of an exclusively manual focussing operation.

7. Autofocussing device according to claims 1 to 6, characterized in that the half-wave voltage from a power rectifier is used for the pulse control of the IR-light-emitting diode (1).

**Revendications**

1. Dispositif de mise au point automatique pour projecteurs de diapositives, comprenant une source de lumière de mesure (1) dont le faisceau lumineux de mesure est dirigé sur une surface de la diapositive à focaliser et est réfléchie par elle vers un photodétecteur double (2, 3) couplé au système de focalisation et commandant un amplificateur de réglage, de manière qu'un moteur à courant continu (18), prévu à la suite de cet amplificateur, actionne un entraînement de focalisation jusqu'à ce que la lumière de mesure réfléchie par l'objet (la diapositive) tombe sur le milieu du photodétecteur double, caractérisé en ce que la source de lumière de mesure utilisée est une diode électroluminescente à infrarouge (1) dont l'émission de lumière est pulsée, que l'on a prévu un amplificateur de tension alternative (4, 5) qui amplifie seulement la composante alternative du signal reçu du photodétecteur double (2, 3), laquelle est redressée ensuite, que l'on a prévu un amplificateur supplémentaire (14, 17), au moyen duquel le moteur a courant continu (18) est commandé par ce signal redressé, et que l'on a prévu un circuit de réglage (20, 21, 22) par lequel l'émission de lumière de mesure de la diode électroluminescente à infrarouge (1) est réglée en fonction du signal reçu.

2. Dispositif selon la revendication 1, caractérisé en ce que chacune des deux moitiés (2 ou 3) du photodétecteur est connectée à un amplificateur de tension alternative (4 ou 5) qui amplifie seulement la composante alternative du signal reçu, que chacun de ces amplificateurs (4, 5) est suivi d'un circuit de redressement (8, 10 ou 9, 11) pour redresser le signal alternatif amplifié, dont chacune des sorties est reliée à une entrée d'un amplificateur différentiel (14), et que la sortie de l'amplificateur différentiel (14) commande le moteur à courant continu (18) à travers un étage d'attaque (17).

3. Dispositif selon les revendications 1 et 2, caractérisé en ce qu'une tension de contre-réaction est appliquée depuis la sortie de l'étage d'attaque (17) et à travers une résistance (16) à l'entrée correspondante de l'amplificateur différentiel (14), qu'une tension de rétroaction conjointe est appliquée depuis la sortie de l'amplificateur différentiel (14) et à travers une résistance (16) à l'entrée non inverseuse de l'amplificateur différentiel (14) et que les résistances (15, 16) sont dimensionnées de manière que la tension de rétroaction conjointe soit inférieure à la tension de contre-réaction.

4. Dispositif selon les revendications 1 à 3, caractérisé en ce que les signaux redressés aux sorties des circuits de redressement (8, 10 ou 9, 12) sont appliqués à travers des résistances d'addition (12, 13) à un point d'addition commun (20), lequel est connecté à l'entrée d'un autre amplificateur (21) dont la sortie commande, à travers un transistor à passage longitudinal (22), le courant parcourant la diode électroluminescente à infrarouge (1) et, partant, l'intensité du faisceau lumineux de mesure.

5. Dispositif selon les revendications 1 à 4, caractérisé en ce qu'une focalisation manuelle, prévue dans une télécommande, peut être raccordée aux entrées de l'amplificateur différentiel (14) à travers des diodes (30, 31) et des résistances (32, 33), la focalisation manuelle étant constituée de deux inverseurs manoeuvrables alternativement au moyen d'une bascule de commutation, dont les contacts mobiles sont reliés au potentiel négatif s'ils ne sont pas actionnés et sont reliés au potentiel positif s'ils sont actionnés, et que les diodes (30, 31) sont polarisées de manière que seul le potentiel positif puisse parvenir aux entrées de l'amplificateur différentiel (14).

6. Dispositif selon la revendication 5, caractérisé en ce que l'on a prévu un interrupteur (36) pour déconnecter la diode électroluminescente à infrarouge en vue de la mise hors service de la fonction de mise au point automatique lorsqu'on travaille exclusivement avec la focalisation manuelle.

7. Dispositif selon les revendications 1 à 6, caractérisé en ce que la tension demi-onde d'un redresseur branché sur le secteur est utilisée pour l'alimentation par impulsions de la diode électroluminescente à infrarouge (1).

Fig. 1

**0 131 794**

Fig. 2